# EUROPÄISCHE PATENTANMELDUNG

(11) **EP 4 177 489 A1**
(43) Veröffentlichungstag der Anmeldung: **10.05.2023**
(21) Anmeldenummer: 21207037.9
(22) Anmeldetag: 09.11.2021
(51) Int. Cl.: F16C 27/02, F16C 33/72, F16F 9/00

(54) **LAGERELEMENT FÜR EINE ROTIERENDE WELLE, LEICHTMETALL-GUSSBAUTEIL UND ELEKTRISCHE MASCHINE**

(71) Anmelder: Siemens Aktiengesellschaft, 80333 München (DE)
(72) Erfinder: Schuh, Carsten, 85598 Baldham (DE); Vollmer, Rolf, 36129 Gersfeld (DE)
(74) Vertreter: Siemens Patent Attorneys

(57) **Zusammenfassung**

Die Erfindung betrifft ein Lagerelement (2) für eine rotierende Welle (4) umfassend einen Lagerring (6) und ein den Lagerring (6) rotationssymmetrisch umgebendes Dämpfungselement (7), wobei das Dämpfungselement (7) ein Gehäuse (8) aufweist, das einen inneren Ring (10) und einen äußeren Ring (12) sowie axiale Begrenzungselemente (14) umfasst, die zusammen einen Hohlraum (16) bilden. Die Erfindung zeichnet sich dadurch aus, dass in dem Hohlraum (16) mindestens eine rotationssymmetrische Scheibe (18) angeordnet ist, die in ihrer radialen Ausdehnung regelmäßig variierende Durchmesser aufweist und ein Umfangsprofil (20) der Scheibe (18) mit einem Gegenprofil (22) korrespondiert und mit dem Gegenprofil (22) in einer kraftschlüssigen Wirkverbindung steht.

## Beschreibung

Die Erfindung betrifft ein Lagerelement für eine rotierende Welle nach dem Oberbegriff des Patentanspruchs 1 sowie ein Gussteil nach Patentanspruch 11 und eine elektrische Maschine nach dem Patentanspruch 13.

Bei rotierenden Maschinen weisen die Rotoren eine dynamisch sich ändernde Relativbewegung in radialer und auch axialer Richtung in Bezug auf die quasi-ruhenden Statoren bzw. Gehäuse auf. Diese Relativbewegungen können sowohl entlang der Rotorachse als auch dem Rotoraußenumfang unterschiedlich und sich dynamisch ändernd ausgebildet sein. De facto ändert sich somit dynamisch das jeweilige lokale Spaltmaß zwischen Rotor und Stator in jedem Ortspunkt auf der Rotoroberfläche.

Die Rotoren selbst bewegen sich dabei dynamisch mit unterschiedlichen Resonanzmoden, was bei elektrischen Maschinen im Wesentlichen durch die erzeugten elektromagnetischen Kräfte, die mechanischen Fliehkräfte (z.B. Unwuchten) und die dynamische Steifigkeit und Dämpfungseigenschaft von Rotor, Rotorlagerung im Gehäuse, dem Gehäuse selbst sowie der Lagerung des Gehäuses hervorgerufen und beeinflusst wird. Die mechanische Wirkkette kann dabei als Reihenschaltung folgender Elemente beschrieben werden. Zum einen wären dabei Toleranzen des Aufbaus von Rotor, Lager und Stator bzw. Gehäuse zu nennen. Hierunter fallen z.B. geometrische Toleranzen, Unwuchten, Lagerspiel, radiale unterschiedliche thermische Ausdehnungskoeffizienten, Exzentrizitäten, Steifigkeitsunterschiede usw. Hinzu kommen in radialer Richtung unterschiedliche elektromagnetische Felder und Induktivitäten sowie unterschiedliche lokale Erwärmungen des Gesamtaufbaus im Betrieb. Diese Einflussfaktoren führen zur Ausbildung einer resonanten dynamischen Eigenschwingung der Rotorachse für jeden spezifischen Ansteuerungs- und Lastfall. Die so erzeugten dynamischen Relativbewegungen der Rotorachse wirken über das Rotorlager und die Lagerbuchse in das Lagerschild des Motorgehäuses.

Aufgrund der so beschriebenen mechanischen Wirkungskette kommt es bei einer angeregten resonanten Eigenschwingung der Rotor-achse zu mechanischen Schwingungen im Gehäuse und Gehäuselager, welche sich dann als Vibration in Form von Körperschall als auch in Form von akustischen Phänomenen wie Geräuschen bemerkbar machen.

Um Motorgeräusche und Schwingungen zu reduzieren, werden nach dem Stand der Technik folgende Maßnahmen umgesetzt. Z.B. werden träge Massen am Rotor eingesetzt, oder der Rotor wird überdimensioniert, sodass eine Verschiebung der Resonanzfrequenzen der mechanischen Komponenten in einen unkritischen Bereich erfolgt. Zum anderen ist der Einbau von Gummi-O-Ringen in den Lagersitz der Rotoren üblich. Auch das Anbringen passiver Dämpfungselemente für bestimmte Resonanzschwingungsbereiche sowohl am Rotor selbst als auch am Motorgehäuse bzw. an den Auflagern des Gehäuses ist üblich. Dabei haben diese beschriebenen Maßnahmen im Allgemeinen jedoch eine signifikante Reduktion der Lagersteifigkeit und damit ein höheres relatives Spaltmaß zur Folge.

Die Aufgabe der Erfindung besteht darin, eine Verbesserung der Dämpfung der entstandenen Rotorschwingungen herbeizuführen und damit eine Reduzierung der mechanischen Schwingungen und der Geräuschentwicklung am Motor zu erzielen.

Die Lösung der Aufgabe besteht in einem Lagerelement mit den Merkmalen des Patentanspruchs 1 sowie in einem Gussteil nach Anspruch 11 und in einer elektrischen Maschine mit den Merkmalen des Patentanspruchs 13.

Das Lagerelement für eine rotierende Welle nach Patentanspruch 1 umfasst einen Lagerring und ein den Lagerring rotationssymmetrisch umgebendes Dämpfungselement, wobei das Dämpfungselement ein Gehäuse aufweist, das einen inneren Ring und einen äußeren Ring sowie axiale Begrenzungselemente umfasst, die zusammen einen Hohlraum bilden, dadurch gekennzeichnet, dass in dem Hohlraum mindestens eine rotationssymmetrische Scheibe angeordnet ist, die in ihrer radialen Ausdehnung regelmäßig variierende Durchmesser aufweist und ein Umfangsprofil der Scheibe mit einem Gegenprofil korrespondiert und mit dem Gegenprofil in einer kraftschlüssigen Wirkverbindung steht.

Der Vorteil des beschriebenen Lagerelements besteht darin, dass die in dem Hohlraum angeordnete rotationssymmetrische Scheibe mit dem Gegenprofil in Formschluss oder aber auch in Kraftschluss steht und dabei ein Haft(-reib-)schluss entsteht, sodass Energie in Form von Wärme durch die Scheibe und das Lagerelement insgesamt dissipiert wird. Dies trägt zur Dämpfung einer mechanischen Bewegung oder Schwingung bei. Die regelmäßig variierenden Durchmesser der Scheibe führen dazu, dass bei einer Rotationsbewegung die Reibung zwischen der Scheibe und dem Gegenprofil in unterschiedliche Richtungen und in unterschiedlicher Intensität erfolgt, wodurch ein größeres Spektrum an Schwingungen abgedämpft werden kann.

Dabei kann es zweckmäßig sein, dass das Gegenprofil stoffschlüssig oder formschlüssig fest mit dem Gehäuse verbunden ist. Dabei kann das Gegenprofil auch mit dem äußeren Ring, der Bestandteil des Gehäuses ist, verbunden sein. Auf diese Weise wird die Scheibe, die im Hohlraum angeordnet ist, stets durch das äußere Gegenprofil in Eingriff genommen, sodass die beschriebene Wirkung der Dämpfung erzielt wird. Wenn das Gegenprofil bereits integraler Bestandteil des Gehäuses ist, ist diese Herstellung technisch mit einem geringen Aufwand zu generieren.

Besonders zweckmäßig ist es, wenn zwischen der Scheibe und dem Gegenprofil ein Spiel besteht. Hierdurch kann der Reibschluss mit dem Gegenprofil so gestaltet werden, dass er bei einer bestimmten Umdrehungszahl oder bei einem bestimmten Rotationsverhalten auftritt.

In einer weiteren vorteilhaften Ausgestaltungsform der Erfindung ist in radialer Richtung ein Scheibenpaar von 2 Scheiben angeordnet, einer inneren Scheibe und einer äußeren Scheibe. Diese Scheiben ergänzen sich in ihrer planaren Erstreckung rotationssymmetrisch und greifen so gemeinsam in das Gegenprofil ein. Auf diese Weise werden die Dämpfungseigenschaften des beschriebenen Lagerelements insofern noch verbessert, dass ein großer Bereich an Anregungsfrequenzen und Schwingungsamplituden durch die Bewegung der beiden Scheiben während der Rotation kompensiert werden können.

Hierfür ist es zweckmäßig, wenn zwischen der inneren Scheibe und der äußeren Scheibe ebenfalls ein Spiel besteht. Auch dies dient dazu, einen möglichst großen Bereich an Anregungsfrequenzen und Schwingungsamplituden zu kompensieren.

Ferner ist es zweckmäßig, wenn in dem Gehäuse mehrere Ebenen von Scheiben in axialer Richtung angeordnet sind. Diese Scheiben oder Scheibenpaarungen in den unterschiedlichen Ebenen können dabei wie beschrieben unterschiedliche Geometrien, d. h. planare Profile aber auch unterschiedliche Dicken aufweisen. Auch die unterschiedlichen Geometrien bzw. Dicken und somit unterschiedlichen Massen der Scheiben dienen dazu, möglichst viele Schwingungsamplituden zu erfassen und zu kompensieren.

Eine weitere vorteilhafte Ausgestaltungsform der Erfindung besteht darin, dass die Zwischenräume zwischen den Scheiben untereinander und dem Gegenprofil, also das bereits genannte Spiel innerhalb der Paarungen mit einem Fluid umgeben ist. Ein Fluid kann dabei insbesondere ein Öl, ein Gel oder ein Elastomer sein. Hierdurch wird eine verschleißbehaftete direkte Reibung der einzelnen Scheiben untereinander bzw. mit dem Gegenprofil unterbunden, was insgesamt die Lebensdauer des Lagerelementes und somit der Maschine erhöht.

Ein weiterer Bestandteil der Erfindung ist ein Gussbauteil, das ein vorher beschriebenes Lagerelement umfasst, wobei das Lagerelement zumindest teilweise durch das Material des Gussbauteils umgossen ist. Hierin besteht ein herstellungstechnischer Vorteil, wobei das Lagerelement durch das Gießverfahren in das Gussbauteil integriert und exakt positioniert ist.

Dabei ist das Gussbauteil in einer bevorzugten Ausgestaltungsform der Erfindung ein Lagerschild für eine elektrische Maschine. Somit ist auch die elektrische Maschine unter Anwendung des beschriebenen Gussbauteils Bestandteil der Erfindung. Grundsätzlich kann das beschriebene Lagerelement jedoch auch in anderen Maschinen, wie beispielsweise Hubkolbenmaschinen, dort beispielsweise in Lagerstühlen von Nockenwellen und Kurbelwellen zum Einsatz kommen.

Weitere Ausgestaltungsformen und weitere Merkmale der Erfindung werden anhand der folgenden Figuren näher erläutert. Dabei handelt es sich um stark schematische Darstellungen, die keine Einschränkung des Schutzbereichs darstellen. Merkmale mit derselben Bezeichnung aber unterschiedlichen Ausgestaltungsformen sind dabei mit demselben Bezugszeichen versehen.

Dabei zeigen:
- Figur 1: eine dreidimensionale Darstellung einer typischen elektrischen Maschine mit einem Lagerschild zur Lagerung einer rotierenden Welle,
- Figur 2: eine vergrößerte Darstellung des Lagerschildes mit einem eingegossen Lagerelement,
- Figur 3: einen Querschnitt durch ein Lagerelement mit einem Dämpfungselement und einer Welle im Zentrum
- Figur 4: einen Querschnitt durch das Lagerelement an dem Schnitt IV,
- Figur 5: einen Segmentausschnitt aus einem Querschnitt durch ein Lagerelement mit 2 Scheiben in einer Ebene,
- Figur 6: einen Segmentausschnitt analog Figur 5 mit einer alternativen Geometrie der Scheiben.

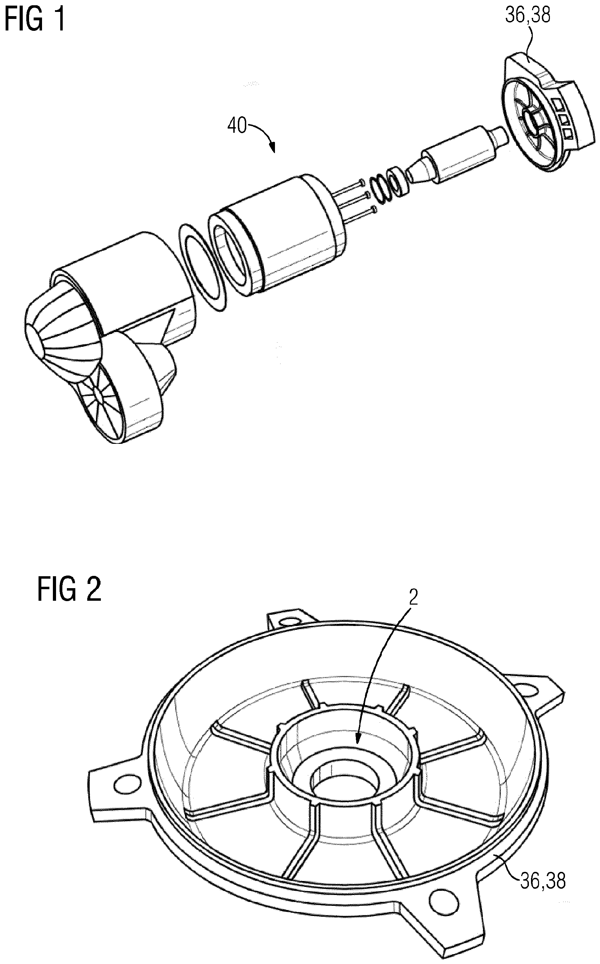

In Figur 1 ist eine dreidimensionale Explosionszeichnung einer typischen elektrischen Maschine 40, in diesem Fall eines Elektromotors, dargestellt. Die elektrische Maschine 40 weist dabei ein Gussbauteil 36 in Form eines Lagerschilds 38 auf. Dieses Lagerschild 38 umfasst dabei ein Lagerelement 2, dass in das Lagerschild 38 eingegossen ist. Das Eingießen des Lagerelements 2 erfolgt dabei beispielsweise im Rahmen eines Druckgießverfahrens, wobei das Lagerelement exakt in einem Druckgießwerkzeug positioniert werden kann und somit im fertigen Gussbauteil 36, also dem Lagerschild 38 mit einer sehr niedrigen Toleranz exakt angeordnet ist.

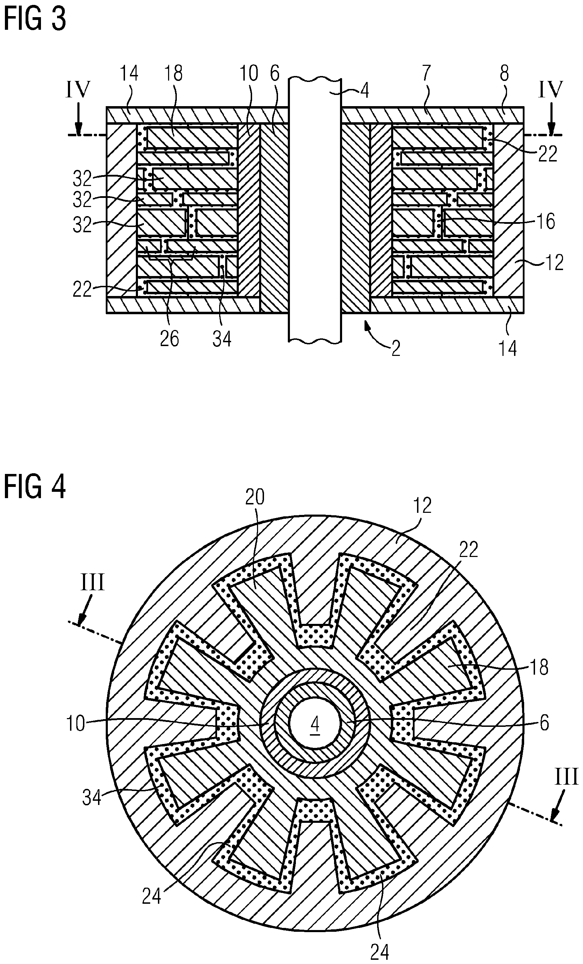

In Figur 3 ist ein Querschnitt durch ein Lagerelement 2 abgebildet. Um eine rotierende Welle 4, die nicht Bestandteil des Lagerelements ist, ist ein Lagerring 6 angeordnet. Der Lagerring 6 ist dabei wiederum von einem Dämpfungselement 7 umgeben. Das Dämpfungselement 7 weist dabei ein Gehäuse 8 auf, dass einen inneren Ring 10 und einen äußeren Ring 12 aufweist. Ferner sind axiale Begrenzungselemente 14 als Gehäuseteile vorgesehen, die das Gehäuse 8 in axialer Richtung abdecken. Die einzelnen Gehäuseteile 10, 12, 14 können dabei formschlüssig oder stoffschlüssig verbunden sein. Sie bilden dabei einen Hohlraum 16 aus.

In dem Hohlraum 16 ist zumindest eine Scheibe 18 angeordnet, wie dies beispielhaft in Figur 4 dargestellt ist. In Figur 4 ist dabei exemplarisch ein Schnitt aus Figur 3 entlang der Linie, die mit IV bezeichnet ist, abgebildet. Im Gegenzug dazu entspricht die Querschnittsdarstellung gemäß Figur 3 schematisch der Linie III in Figur 4. In der Querschnittsdarstellung gemäß Figur 4 ist die Scheibe 18 abgebildet, die um den inneren Ring 10 angeordnet ist und mit einem äußeren Umfangsprofil 20 mit einem Gegenprofil 22 korrespondiert. Das Gegenprofil 22 ist dabei in einer vorteilhaften Ausgestaltungsform ein integraler Bestandteil des äußeren Ringes 12.

In Figur 4 ist zu erkennen, dass die Scheibe 18 um den inneren Ring 10 herum angeordnet ist. Zwischen der Scheibe 18 und dem Gegenprofil 22 weist das Umfangsprofil der Scheibe 18 ein Spiel 24 auf. Bei einer rotierenden Bewegung der Achse 4 können dadurch Schwingungen, die durch Unwuchten oder Vibrationen auftreten, über die Scheibe 18 auf das Gegenprofil 22 übertragen werden. Insbesondere wenn das Volumen des Spiels 24 durch ein Fluid gefüllt ist, hat dies eine dämpfende Wirkung auf die Übertragung der Vibrationen. Ferner ist ein Fluid dazu geeignet, Verschleiß zwischen der Scheibe 18 und dem Gegenprofil 22, der durch Reibung erzeugt wird, zu verringern.

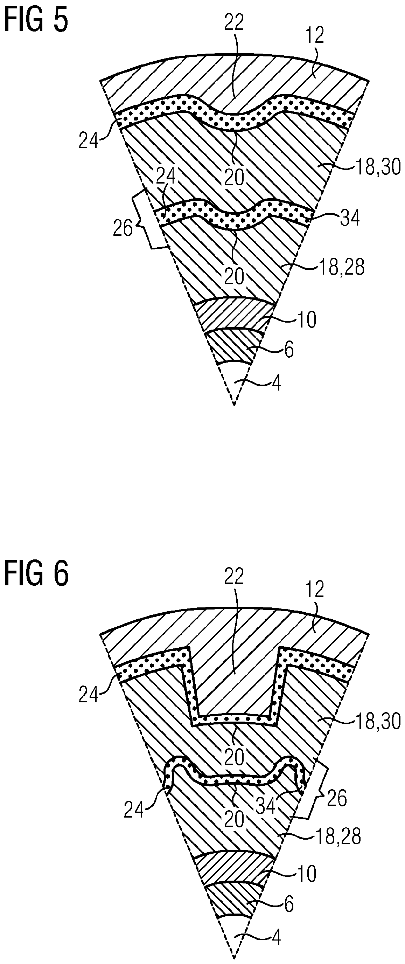

In Figur 3 sind rein exemplarisch in axialer Richtung der rotierenden Welle 4 mehrere Ebenen von Scheiben 18 bzw. von Scheibenpaaren 26 übereinander abgebildet. Dabei umfasst ein Scheibenpaar 26 zumindest eine innere Scheibe 28 und eine äußere Scheibe 30. Mögliche Umfangsprofile 20 der Scheiben 18, 28, 30 sind exemplarisch in den segmentierten Darstellungen der Figuren 5 und 6 abgebildet. Hierbei sind in einer Ebene des Lagerelements 2 im Hohlraum 16 radial nach außen nicht nur eine Scheibe 18, wie das in Figur 4 dargestellt ist, sondern 2 konzentrisch umeinander angeordnete Scheiben 28, 30 angeordnet. Auch zwischen den Scheiben 28, 30 liegt in radialer, wie auch in axialer Richtung ein Spiel 24 vor, sodass eine Relativbewegung der Scheiben 18, 28, 30 zueinander möglich ist. Durch derartige Relativbewegungen können Schwingungsamplituden absorbiert werden. Die Scheiben 18, 28, 30 weisen dabei ein regelmäßiges Umfangsprofil 20 auf. Die Tatsache, dass die Scheibenpaare 26, jedoch auch die Scheibe 18, wenn sie singulär eingesetzt wird, ein unregelmäßiges Umfangsprofil 20 aufweisen, ergibt den Vorteil, dass Schwingungsamplituden mit unterschiedlichsten Frequenzen über ein möglichst weites Spektrum absorbiert werden können. Auch das Einsetzen von zwei Scheiben 28, 30 in einer Ebene erhöht die Breite des absorbierten Spektrums. Dabei ist anzumerken, dass in den Figuren 4, 5 und 6 eine Symmetrie, jeweils bezogen auf das Kreisbogensegment, vorliegt. Die Kombination der unterschiedlichen Querschnitte der Scheiben 18, 28, 30 und des Spiels 24, das mit einem Fluid bevorzugt gefüllt ist, führt zu einer großen Vielfalt an Reihenschaltungen und/ oder Parallelschaltungen unterschiedlicher Einzel-Dämpfungselemente im Lagerelement 2. Dabei ist jedoch zu beachten, dass in Umfangsrichtung des Lagerelements die Summe aller Steifigkeiten dieser Einzel-Dämpfungselemente pro betrachtetem Kreisbogensegment gleich sein sollte, da die rotierende Welle sonst eine azentrische Bewegung beschreiben würde.

Dabei ist es auch zweckmäßig, dass wie in Figur 3 dargestellt, in verschiedenen Ebenen des Dämpfungselements 7 Scheiben 18 bzw. Scheibenpaare 26 in radialer Richtung unterschiedliche Dicken aufweisen. Auch dies trägt dazu bei, dass die Dämpfungscharakteristik des Lagerelement 2 verbreitert wird.

Die Herstellung der mechanischen Teile des Lagerelement kann bevorzugt durch additive Herstellungsverfahren wie SLM, LMD, WAAM oder auch einen 3-dimensionalen Siebdruck erfolgen.

Eine Möglichkeit, um das Dämpfungselement 7 zusätzlich mit dem Fluid oder einem Gel oder einem elastischen Element zu füllen, ist es, den mechanischen Grundkörper zu evakuieren, mit einem Fluid zu infiltrieren und das Fluid dann optional zu gelieren oder auszuhärten. Hierzu kann beispielsweise ein sogenanntes Sol-Gel-Verfahren, zum Beispiel ein Silikongel herangezogen werden. Auch das Aushärten eines elastischen Formkörpers ist nach diesem Infiltrationsprozess möglich. Um die Viskosität oder elastischen Eigenschaften des Dämpfungselements 7 dabei in einem größeren Bereich anpassen zu können, werden dem Fluid in vorteilhafter Weise noch feste Füllstoffe in Form von Partikeln, Whiskern, Platelets, Faser oder ähnlichem zugeführt. Bevorzugt soll das zugefügte Fluid oder Elastomer oder Gel auch nach der Befüllung in einem viskosen oder viskoelastischem Zustand bleiben. Dazu ist es zweckmä-ßig, wenn die Einfüllöffnung an dem Dämpfungselement 7 nach dem Füllvorgang hermetisch verschlossen wird. Dies kann beispielsweise durch Zuschweißen oder Verschrauben erfolgen.

Das beschriebene Lagerelement 2 hat insgesamt eine Reihe von Vorteilen. Zum Beispiel kann über das Design und die Auslegung der Scheiben 18, 28, 30 deren Anordnung zueinander, beispielsweise in Form von Scheibenpaaren 26 sowie durch das Beifügen eines Fluid, Gels oder eines elastischen Elementes und von Füllstoffen die Kraft-Weg-Charakteristik und damit die grundlegenden Dämpfungseigenschaften des Lagerelements 2 voreingestellt und an das jeweilige Betriebs- und Belastungsprofil der elektrischen Maschine angepasst werden. Hierdurch ist ferner eine sehr breitbandige Dämpfung durch die beschriebenen unregelmäßigen Strukturen erzielbar. Das Lagerelement ist auch für den Anwendungsfall flexibel konfigurierbar und herstellbar, insbesondere da additive Herstellungsverfahren zur Herstellung der Struktur des Lagerelements 2 angewandt werden können.

Insgesamt wird durch das beschriebene Lagerelement 2 eine hoch-effektive Dämpfung der Maschine, insbesondere der elektrischen Maschine gewährleistet, welche auch unter stark wechselnden Einsatzbedingungen wie Drehzahl, Last, Drehmoment, Umgebungstemperatur und Motortemperatur wirksam ist. Dabei weist das beschriebene Lagerelement 2 trotz guter Dämpfungseigenschaften eine hohe mechanische Steifigkeit auf, die sowohl in radialer als auch in axialer Richtung wirkt.

Ferner wird dabei die notwendige axiale Beweglichkeit zur Kompensation von thermischen Ausdehnungen der Welle 4 nicht behindert. Des Weiteren wird durch die Verwendung von Füllmaterialien wie dem beschriebenen Öl, Gel oder Elastomer eine verschleißbehaftete, direkte Reibung von einzelnen Strukturelementen, also den Scheiben 18, 28, 30 unterbunden und damit eine definierte, reproduzierbare und resiliente Lösung zur effektiven Schwingungsdämpfung mit hoher Lebensdauer umgesetzt.

Eine ebenso wichtige vorteilhafte Wirkung des beschriebenen Lagerelements ist insbesondere die geringere Geräuschemittierung und die geringeren anfallenden Schwingungen. Außerdem schafft das beschriebene Lagerelement 2 die Möglichkeit, aufgrund der beschriebenen Vorteile die Maschine leichter, mit höherer Dynamik und mit einer geringeren Masse zu konstruieren. Eine besondere Anwendung des beschriebenen Lagerelements 2 ist zum Beispiel für Exoskelette, Leichtbauroboter, Drohnen oder dynamisch bewegte Portale zweckmäßig.

### Bezugszeichenliste

- 2: Lagerelement
- 4: rotierende Welle
- 6: Lagerring
- 7: Dämpfungselement
- 8: Gehäuse
- 10: innerer Ring
- 12: äußerer Ring
- 14: axiale Begrenzungselemente
- 16: Hohlraum
- 18: Scheibe
- 20: Umfangsprofil Scheibe
- 22: Gegenprofil
- 24: Spiel
- 26: Scheibenpaar
- 28: innere Scheibe
- 30: äußere Scheibe
- 32: Scheibenebenen
- 34: Fluid
- 36: Gussbauteil
- 38: Lagerschild
- 40: elektrische Maschine

## Patentansprüche

1. Lagerelement (2) für eine rotierende Welle (4) umfassend einen Lagerring (6) und ein den Lagerring (6) rotationssymmetrisch umgebendes Dämpfungselement (7), wobei das Dämpfungselement (7) ein Gehäuse (8) aufweist, das einen inneren Ring (10) und einen äußeren Ring (12) sowie axiale Begrenzungselemente (14) umfasst, die zusammen einen Hohlraum (16) bilden, **dadurch gekennzeichnet, dass** in dem Hohlraum (16) mindestens eine rotationssymmetrische Scheibe (18) angeordnet ist, die in ihrer radialen Ausdehnung regelmäßig variierende Durchmesser aufweist und ein Umfangsprofil (20) der Scheibe (18) mit einem Gegenprofil (22) korrespondiert und mit dem Gegenprofil (22) in einer kraftschlüssigen Wirkverbindung steht.

2. Lagerelement nach Anspruch 1, **dadurch gekennzeichnet, dass** das Gegenprofil (22) stoffschlüssig oder formschlüssig fest mit dem Gehäuse (8) verbunden ist.

3. Lagerelement nach Anspruch 2, **dadurch gekennzeichnet, dass** das Gegenprofil (22) mit dem äußeren Ring (12) verbunden ist.

4. Lagerelement nach einem der Ansprüche 1 bis 3, **dadurch gekennzeichnet, dass** zwischen der Scheibe (18) und dem Gegenprofil (22) ein Spiel (24) besteht.

5. Lagerelement nach einem der Ansprüche 1 bis 4, **dadurch gekennzeichnet, dass** in radialer Richtung ein Scheibenpaar (26) von zwei Scheiben (28, 30) angeordnet ist, eine innere Scheibe (28) und eine äußere Scheibe (30), die sich in ihrer planaren Erstreckung rotationssymmetrisch ergänzen und gemeinsam in das Gegenprofil (22) eingreifen.

6. Lagerelement nach Anspruch 5, **dadurch gekennzeichnet, dass** zwischen der inneren Scheibe (28) und der äußeren Scheibe (30) ebenfalls ein Spiel (24) besteht.

7. Lagerelement nach einem der vorhergehenden Ansprüche, **dadurch gekennzeichnet, dass** in dem Gehäuse (8) mehrere Ebenen (32) von Scheiben (18, 28, 30) in axialer Richtung angeordnet sind.

8. Lagerelement nach einem der Ansprüche 5 bis 7, **dadurch gekennzeichnet, dass** in den unterschiedlichen Scheibenebenen (32) Scheibenpaare (26) mit unterschiedlichen planaren Profilen angeordnet sind.

9. Lagerelement nach einem der Ansprüche 7 bis 8, **dadurch gekennzeichnet, dass** in den unterschiedlichen Scheibenebenen (32) Scheibenpaare (26) mit unterschiedlichen Dicken angeordnet sind.

10. Lagerelement nach einem der vorhergehenden Ansprüche, **dadurch gekennzeichnet, dass** die mindestens eine rotationssymmetrische Scheibe (18, 28, 30) im Hohlraum (16) von einem Fluid (34) umgeben ist.

11. Leichtmetall-Gussbauteil (36) umfassend ein Lagerelement (2) nach einem der Ansprüche 1 bis 10, **dadurch gekennzeichnet, dass** das Lagerelement (2) zumindest teilweise durch das Material des Gussbauteils (36) umgossen ist.

12. Gussbauteil nach Anspruch 11, **dadurch gekennzeichnet, dass** das Gussbauteil (36) ein Lagerschild (38) für eine elektrische Maschine (40) ist.

13. Elektrische Maschine umfassend ein Gussbauteil (36) in Form eines Lagerschildes (38) nach Anspruch 12.
